(19) Europäisches Patentamt
European Patent Office
Office européen des brevets

(11) Publication number: **0 311 899 A2**

(12) **EUROPEAN PATENT APPLICATION**

(21) Application number: **88116543.5**

(51) Int. Cl.⁴: **C07C 87/50 , C07C 93/14**

(22) Date of filing: **06.10.88**

(30) Priority: **14.10.87 US 108407**

(43) Date of publication of application: **19.04.89 Bulletin 89/16**

(84) Designated Contracting States: **DE FR GB**

(71) Applicant: **AIR PRODUCTS AND CHEMICALS, INC.**
**P.O. Box 538**
**Allentown, Pennsylvania 18105(US)**

(72) Inventor: **Burgoyne, William Franklin, Jr.**
**1090C Cold Stream Circle**
**Emmaus, PA 18094(US)**
Inventor: **Dixon, Dale David**
**2216 Parklake Pointe**
**Venice, FL 33595(US)**

(74) Representative: **Kador & Partner**
**Corneliusstrasse 15**
**D-8000 München 5(DE)**

# (54) Alpha, beta-unsaturated alkenyl bis-aryldiamines for use in preparing cross-linkable condensation polymer.

(57) This invention relates to a class of alkenylated dianilines having at least one alkenyl group ortho to an amine group and in conjugated relationship to the ring. More particularly the dianilines are represented by the formula:

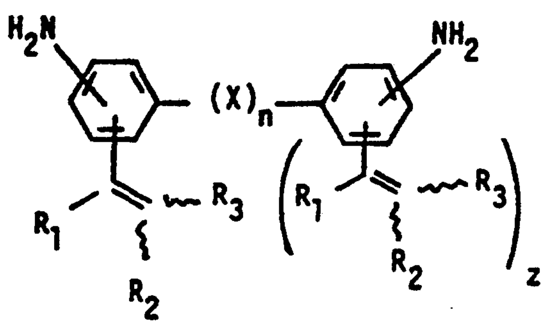

wherein $R_1$, $R_2$, and $R_3$, are hydrogen, $C_{1-3}$ aliphatic, phenyl, halogen or alkoxy radicals, or $R_1$ and $R_2$ or $R_3$ are bridged via an alkylene radical $-(CH_2)_y-$ wherein $y=2$ to 5, and provided not more than one is phenyl, halogen, or alkoxy, X is methylene, alkylene, or branched $C_1$-$C_6$ alkylene group, oxygen, sulfur, carbonyl, sulfonyl; or fluoroalkylene group, $n=0$ or 1, and $z=0$ or 1.

The above described alkenylated dianilines have been found to be well suited as tri-and tetra functional chain extenders in forming polyurethane/urea elastomers systems and for providing pendant unsaturation for post curing and polymerization.

EP 0 311 899 A2

# α,β-UNSATURATED ALKENYL BIS-ARYLDIAMINES FOR USE IN PREPARING CROSS-LINKABLE CONDENSATION POLYMER

## TECHNICAL FIELD

This invention pertains to α,β- unsaturated alkenyl bis-aryldiamines having particular suitability for post curable, cross-linkable polyamide and polyurethane systems.

## BACKGROUND OF THE INVENTION

Alkylated diamines have been known for a substantial period of time and find use in the preparation of polyurethane elastomers. The diamines are typically used in that form as chain extenders for polyurethanes, i.e., forming a short chain urea linkage to strengthen the elastomer. As is known, the alkyl group alters the reactivity of the amine thus giving the composition unique processing properties for producing polyurethane elastomers.

A secondary use for the alkylated diamine products is in the manufacture of diisocyanates which are also suited for the synthesis of polyurethane elastomers. They can also be used for plasticizers, or as intermediates for the manufacture of pesticides and alkyd resin modifiers.

Two types of synthesis techniques have been used to produce alkylated aromatic amines, such as, an alkylated toluenediamine. One of the earliest techniques used to prepare an alkylated aromatic diamine employed a Friedel-Crafts alkylation of an aromatic hydrocarbon, then dinitration of the alkylated aromatic hydrocarbon followed by reduction of the nitro groups to amine groups. The diamine could be converted to the diisocyanate by reaction with phosgene. Another technique for producing an alkylated aromatic amine involved nitration of an aromatic hydrocarbon, followed by reduction to the amine and then alkylation of the amine.

Representative patents illustrating various alkyl aromatic diamines and derivatives thereof are as follows:

U.S. Patents 3,428,610 and 4,218,543 disclose the use of alkylated toluenediamines in the manufacture of polyurethane resins with the '543 patent showing its use in RIM manufacturing techniques. Alkylated diamines include 1-methyl-3,5-diethylphenylene-2,4-diamine and 1,3,5-trimethylphenylene-2,4-diamine. The diethyltoluenediamine derivative is best known and is referred to as diethyl TDA or DETDA and is probably the most widely used alkylated aromatic diamine for RIM manufacture.

European Patent 0069286 discloses various alkyl-substituted phenylenediamines as chain extenders for the production of polyurethanes by reaction injection molding techniques. Some of the compositions suggested as being suited for such use include the
1,3-dimethyl-5-tert-butyl-2,6-diaminobenzene,
2-methyl-4,6-di-tert-butyl-1,3-diaminobenzene,
1,3-dimethyl-5-tert-amyl-2,4-diaminobenzene or its equivalent.

Aromatic compositions having unsaturated organo substituents are known and have been prepared by alkylation of aromatic compositions with diolefins. Some patents which show the manufacture of aromatic compositions having unsaturated organo substituents include:

U.S. 2,403,963 which discloses the reaction of benzene and butadiene in the presence of a boron trifluoride catalyst. Phenylbutenes are produced.

U.S. 2,471,922 discloses that aromatic hydrocarbons, which include phenols and aromatic halides, can be reacted with 1,3-diolefins to produce alkenyl derivatives. Examples of low-boiling 1,3-diolefins which can be used in the alkenylation include 1,3-butadiene, 1,3-pentadiene and so forth. Catalyst systems included boron trifluoride and boron trifluoride-phosphoric acid systems.

U.S. 3,865,889 discloses the preparation of an alkenylated aromatic hydrocarbon such as those obtained by reacting butadiene with an alkylbenzene, e.g., toluene or xylene. An alkali metal promoter is used to catalyze the reaction.

U.S. 2,843,565 discloses the production of butenyl-phenol-aldehyde resins which involves the reaction of an alkenylphenol, with formaldehyde. Conjugated dienes such as piperylene, cyclopentadiene, 1-chloro-2-methyl-butadiene are reacted with phenols in the presence of phosphoric acid catalyst and the reaction product then reacted with formaldehyde.

West German 1,079,628 discloses the preparation of cyclopentenyl-substituted aromatic amines by

reacting cyclopentadiene at elevated temperature in the presence of bleaching earth with primary, secondary or tertiary aromatic amine substrates. Aniline, N-methylaniline, chloroaniline, and phenylenediamine are suggested candidates.

European Patent 0082258 discloses various meta-phenylenediamines having one or two benzyl rings having lower reactivity due to steric hindrance. Steric hindrance is effected through the use of an aromatic substituent which also may be substituted with various groupings. An example of an amine is 4,6-bis (α,α-dimethylbenzyl)-1,3-phenylenediamine prepared by reacting 2-methylstyrene with meta-phenylenediamine.

An article in the Russian Journal, Neftekhimiya, Vol. 26, No. 1, pp. 117-123, 1986 shows the reaction of aniline or diphenylamine with cyclohexene and with other alkylcyclenes using a modified aluminosilicate catalyst.

## SUMMARY OF THE INVENTION

This invention pertains to α,β-unsaturated alkenyl dianilines and derivatives thereof and particularly to mono-alkenylated dianilines. In contrast to prior art aromatic diamine compositions, the organo group contains carbon-carbon unsaturation and because of its conjugated relationship with the ring is readily polymerizable with amine-reactive difunctional condensation monomers such as dicarboxylic acids and their esters, diisocyanates, and diepoxides and also polymerizable with other unsaturated monomer systems. These aromatic diamine compositions are represented by the formula:

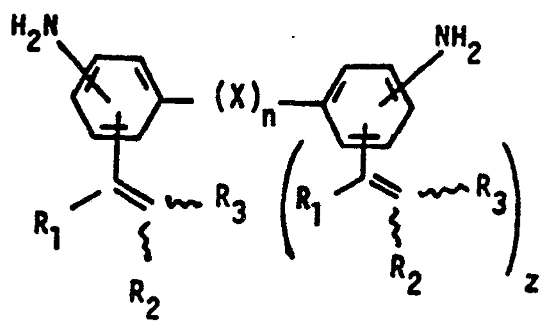

wherein $R_1$, $R_2$, and $R_3$ are hydrogen, $C_{1-3}$ aliphatic, phenyl, halogen or alkoxy radicals or $R_1$ and $R_2$ or $R_3$ are bridged via an alkylene radical $-(CH_2)_y-$ wherein $y = 2$ to 5, X is methylene, alkylene, or branched $C_1$-$C_6$ alkylene group, oxygen, sulfur, carbonyl, sulfonyl; or fluoroalkylene group, $n = 0$ or 1, and $z = 0$ or 1.

The above described alkenylated dianilines have been found to be well suited as tri-and tetra functional chain extenders in forming polyurethane/urea elastomers systems and for providing pendant unsaturation of post curing and polymerization.

There are several advantages associated with the specific compositions of this invention and these advantages include:

• a dianiline composition which has an unsaturated organo group ortho to an amine for providing desirable reactivity for reaction injection molding (RIM) of urethane and polyurea elastomer systems;

• alkenylated dianiline which can be converted to aromatic diisocyanates having carbon-carbon unsaturation for producing unique properties in polyurethane and polyurea resin systems, latexes, UV curable coatings and adhesives and as reactive diluents for polyesters;

• an ability to form polyurethane-urea elastomers systems, either through the diamine functionality or isocyanate functionality, if converted;

• an ability to produce a variety of resin systems, e.g., polyurethane systems; and other condensation polymers such as polyamides, polyesters, and polyethers; and

• an ability to effect reaction between various resin systems and polymerizable monomers and thereby introduce monomer groups for desirable end properties.

## DETAILED DESCRIPTION OF THE INVENTION

The compounds of this invention, as indicated above, are represented by the formula:

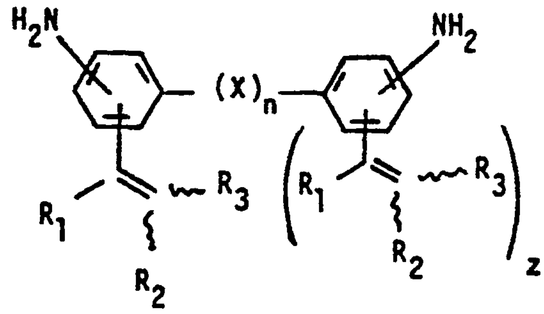

wherein $R_1$, $R_2$, and $R_3$ are hydrogen, $C_{1-3}$ aliphatic, phenyl, halogen or alkoxy radicals, or $R_1$ and $R_2$ or $R_3$ are bridged via an alkylene radical $-(CH_2)_y-$ wherein $y=2$ to 5, and provided not more than one is phenyl, halogen, or alkoxy, X is methylene, alkylene, or branched $C_1$-$C_6$ alkylene group, oxygen, sulfur, carbonyl, sulfonyl; or fluoroalkylene group, $n=0$ or 1, and $z=0$ or 1.

The structural formula has been written to reflect that stereo chemistry exists in the reaction product and $R_2$ may be cis or trans to $R_1$.

The compounds of this invention are synthesized by first alkylating a dianiline with a conjugated diene having from 4 to about 12 carbon atoms and then isomerizing the $\beta,\gamma$-double bond by treatment with a solid or liquid phase base to an $\alpha,\beta$-double bond configuration. It is because the alkenylation is effected via the amino group that one is able to introduce at least one alkenyl group in a position ortho to an amine group and achieve unique results associated with the specific regiochemistry associated with those isomers.

Much of the art describing the manufacture of alkenylated aromatic hydrocarbons uses a homogenous catalyst system, e.g., boron trifluoride or boron trifluoride-phosphoric acid mixture or weakly acidic heterogenous catalyst systems. Other art in the manufacture of alkylated aromatic amines uses bleaching earths, clays, montmorillonite and alkali metal ion exchanged zeolites. In contrast to the prior art method for producing alkenylated phenols and alkylated aromatic amines, it is our belief alkenylated aromatic amines are best prepared using silica-alumina or crystalline molecular sieves which are solid phase and have an acidity factor of at least 0.3 and preferably in excess of 0.8 as the catalyst. The acidity factor is a measurement of acidity of the zeolite catalyst and involves contact of the catalyst with ammonia under adsorption conditions followed by desorption. More particularly, one gram of catalyst is contacted with ammonia at room temperature and then desorbed by heating to a temperature from ambient to 200° C at a rate of 10° per minute, then holding at 200° C for two hours. The amount of ammonia irreversibly adsorbed by one gram at 200° C is indicative of acidity and indicative of the strength of the amine/acid bond. The acidity factor then is the amount of ammonia irreversibly adsorbed expressed in millimoles per gram of catalyst at 200° C and as stated this level should be at least 0.3 and preferably 0.8 millimoles ammonia per gram of catalyst.

Zeolites which can be utilized for alkenylation of dianiline include X, Y, faujasite, ferrierite, offretite, chabazite, gmelinite, erionite, ferrierite, mordenite and the ZSM family. When initially prepared, the cation in the crystalline molecular sieve is an alkali metal, typically sodium. This ion must be exchanged in sufficient proportion, usually, 60% or greater, with an acidic ion such as a rare earth metal, e.g., lanthanum, praseodymium; hydrogen or some of the transition metals such as nickel, copper, chromium and the like. The substitution of various ions for the sodium ion alters the acidity of crystalline molecular sieve, thus making it more reactive and catalytically effective for ring alkenylation of the aromatic amine.

The naturally occurring and synthetic zeolites used in the process normally have a silica to alumina molar ratio from about 2 to 25:1. However, if the silica to alumina ratio is low or acidity borders on the low side of that desired, the silica to alumina ratio and acidity of the zeolite may be altered by a technique called dealumination. In effect, the practice of dealumination decreases the alumina content in the zeolite thereby increasing the silica to alumina ratio. The removal of alumina from the internal structure affects acidity and may also enlarge the cage structure or pore size of zeolite to permit entry of and diffusion of larger molecules into its internal structure. Thus, one may be able to utilize a particular cation in a dealuminated zeolite, but not use the same cation in its non-dealuminated state. This is because the original cation may not have provided sufficient acidity for effecting ring alkenylation of dianilines. Some of the techniques for dealumination include chelation, dehydration or acidification, the latter entailing the treatment of the zeolite with an inorganic acid. Techniques suited for dealumination of zeolites are well known.

Zeolites and crystalline molecular sieves are porous materials with the pores having generally uniform molecular dimensions. Cavities or cages are formed in this zeolite or molecular sieve and connected by channels of generally defined diameter. For the practice of this invention the pore diameter should be sufficiently large to permit the molecules to effectively enter the interior of the molecular sieve for reaction and to exit as final product. Typically, the pore size will range from about 6 to 15 Angstroms, but the size of a pore required for reaction can vary depending upon the product being produced. If conversion levels appear low for the particular catalyst, that level may be due to reactant diffusion resistance through the molecular sieve. If that is the case, a molecular sieve of slightly larger pore size should be tried.

Molecular sieves have been developed which have been defined as nonzeolites but have a cage structure that performs similarly to zeolites. In many cases, they contain alumina and silica in combination with other components, e.g., phosphorus, boron, germanium, titanium, etc. In the alkenylation of dianilines as described here, they perform similarly to zeolites, and representative crystalline molecular sieves are described in U.S. Patent 4,440,871; European Patent 124,119 and European Patent 121,232 and the subject matter of these patents incorporated by reference. Borosilicate and borogermanate zeolites, although not disclosed in these patents, possibly can also be used. For purposes of practicing this invention, i.e., in the production of alkenylated dianilines, molecular sieves are deemed equivalent to and included as catalyst material.

The aromatic amine used in the alkenylation reaction are dianilines such as methylenedianiline and oxydianiline. The alkenylated dianilines are prepared by reacting the diamine with a diolefin in the presence of an acidic solid phase catalyst, particularly the crystalline molecular sieves as described. The initially formed β,γ-unsaturated product is further treated with base at elevated temperature to provide the preferred α,β-unsaturated product. Useful bases for this conversion include Group II metal oxides such as calcium and magnesium oxide, basic hydroxides such as sodium or potassium hydroxide and Group I metal alkyloxides.

Diolefins useful in this invention are acyclic and cyclic conjugated dienes. Examples of some dienes are 1,3-butadiene, isoprene, chloroprene, 2,3-dimethyl-1,3-butadiene, piperylene, 2-methyl-1,3-pentadiene, 2,4-hexadiene, 3,4-dimethyl-2,4-hexadiene, 2-phenyl-1,3-butadiene, 2-methoxy-1,3-butadiene, 2,5-dimethyl-2,4-hexadiene, cyclopentadiene, dicyclopentadiene, methylcyclopentadiene and 1,4-cyclooctadiene.

Some preferred compositions are listed below.

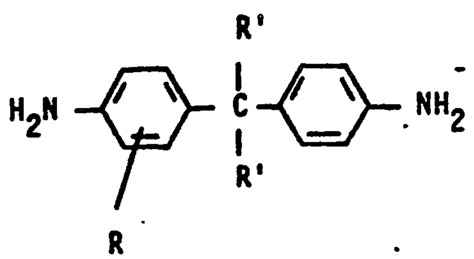
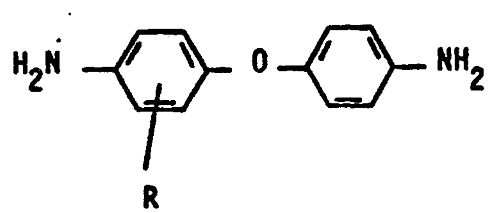

and R' = H, $CH_3$, $CF_3$

R = $-CH{=}CH-CH_2CH_3$

= $-CH{=}CH-CH(CH_3)_2$

= 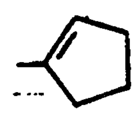

= 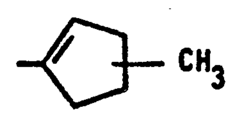

Ring alkenylation is effected by reacting dianiline with the diolefin at temperatures ranging from about 100 to 250° C and preferably from about 140 to 220° C. The pressures will range from about 15 to 2000 psig and generally in the range of 100 to 1000 psig. It is common practice to alter the temperature and the pressure within the above ranges specified to optimize selectivity and conversion to the desired product. Mole ratios of olefin to dianiline used in the reaction will range form about 1:5 to 10:1 and the reaction time will generally be from about 2 to 48 hours when synthesized in an autoclave or within 0.05 to 6 hr -1, expressed as a liquid hourly space velocity (LHSV) for fixed bed continous operation.

In the ring alkenylation of dianilines utilizing the solid acid catalyst systems the diolefins, and

particularly the olefins having conjugated unsaturation, tend to polymerize and generate substantial amounts of byproduct polymer. In many cases the combination of reactant and catalyst preclude the formation of alkenylated dianilines and substantially all of the olefin is converted to by-product polymer. Butadiene and cyclopentadiene are two offenders and both polymerize readily under the reaction conditions providing low yields of ring alkenylation. To avoid polymer production it is necessary to carry out the ring alkenylation of dianilines in the presence of a solvent which is inert to reaction with bis-aryldiamine or the olefin and does not promote polymerization. Solvents which can be best utilized include paraffins such as pentane, hexane, heptane, octane, decane; toluene and xylene, paraffinic naptha fractions, kerosene; and cycloparaffin hydrocarbons having from about 5 to 10 carbon atoms, e.g., cyclohexane and so forth. Other inert solvents, especially others such as dioxane or tetrahydrofuran, may be effectively used.

The desired $\alpha,\beta$-unsaturated alkenylaryldiamines are obtained by treating the initially formed $\beta,\gamma$-unsaturated alkenyl dianiline with base at elevated temperature. The double bond isomerization may be brought about in a temperature range from about 75 °C to 250 °C and preferably from abut 120-220 °C. The reaction is desirably conducted at atmospheric conditions although increased pressure should not interfere with the isomerization. The base is used in catalytic quantities and the transformation is not significantly influenced by the ratio of alkenylated dianiline to base catalyst.

The alkenylated dianilines described herein have a variety of uses and can be used in preparing coatings and adhesives. In contrast to currently available urethane coating systems having unsaturation therein, e.g. those containing glycerides of linseed oil or other siccative oil in an isocyanate prepolymer backbone, the unsaturation is pendant from the backbone. When the unsaturation is in the polymer backbone, as in the prior art, one may experience difficulty in obtaining desirable polymerization rates and in obtaining desirable rates for post curing of the reactive unsaturation. With the alkenylated dianilines, the unsaturation is pendant from the polymer backbone and permits faster post curing while still providing a desirable aromatic ring in the backbone.

The text, Polyurethanes Chemistry and Technology by Saunders and Frisch, (1964) has several chapters relating to the utilization of polyurethanes having unsaturation therein; such chapters include applications for coatings, adhesives, and fibers.

In addition to formulating polyurethanes or polyurea elastomers, the pendant unsaturation in the alkenylated dianilines can be polymerized by conventional techniques with other polymerizable monomers, to enhance the physical properties of the elastomers systems. Typical monomers which may be polymerized with the pendant unsaturation include vinyl acetate, lower alkyl ($C_{1-6}$) esters of acrylic and methacrylic acid, vinyl chloride, vinylidine chloride, styrene, butadiene, isoprene, and cyclopentadiene.

One of the problems associated with effecting polymerization of the $\beta,\gamma$-unsaturated alkenyl dianilines with other polymerizable monomers is the relatively slow polymerization activity of the alkenylated aromatic diamine. During alkenylation, rearrangement of the double bond occurs and the double bond becomes allylic to the aromatic ring. As is known, the reactivity of the allylic double bond is low and catalyst levels and conditions may require adjustment to obtain desirable polymerization rates. In this invention the double bond is isomerized to a conjugated relationship with the ring thus imparting higher activity to the unsaturated position.

The alkenylated dianilines described herein are excellent monomers for preparing high performance polymers such as polyaramides and polyamides, having pendant functionality for adhesion and cross-linking.

The following examples are provided to illustrate preferred embodiments of the invention and are not intended to restrict the scope thereof. The indicated products gave satisfactory spectral analyses.

## Example 1

## Preparation of Cyclopentenyl Aniline

A down-flow, fixed-bed microreactor was charged with 12 cc (6.00 g) of an amorphous acid catalyst comprised of 13% alumina and 87% silica. Aniline (1.5 cc/hr, 16.5 mmol/hr), 1.02 cc/hr (8.2 mmol/hr) of dicyclopentadiene, and 5.69 cc/hr (49.4 mmol/hr) of pentane were then pumped over the catalyst bed at a pressure of 800 psig. The temperature of the catalyst bed was raised to 160 °C. After a 24-hr period, a sample of the reactor effluent was taken and analyzed on a hydrogen-free basis by gas chromotography.

Analyses of the reaction product obtained at 160 °C along with reaction products obtained at reaction temperatures of 180 and 200 °C are presented in Table 1.

Table 1

| Products Derived from Cyclopentadiene Addition to Aniline | | | | |
|---|---|---|---|---|
| Run No. | Temp. (°C) | wt% composition of aromatic amines | | |
| | | $PhNH_2$ | 2-$(C_5H_6)PhNH_2$[a] | 4-$(C_5H_6)PhNH_2$[b] |
| 1 | 160 | 75.26 | 22.13 | 2.61 |
| 2 | 180 | 34.05 | 57.07 | 8.88 |
| 3 | 200 | 38.37 | 41.17 | 20.46 |

a) 2-(cyclopent-2-enyl)aniline
b) 4-(cyclopent-2-enyl)aniline

## Example 2

## Preparation of 4,4′-Methylene-bis(2-(cyclopent-2-enyl)aniline)

A 500 mL, round-bottomed flash equipped with a magnetic stir bar, addition funnel, thermometer, and a condenser was charged with 19.7g of 37 wt% hydrochloric acid, 30 mL of tetrahydrofuran, and 30 mL of distilled water. A 31.9g (0.201 mol) portion of 2-(cyclopent-2-enyl) aniline from Example 1 was added to the aqueous acid over a 30 min period with rapid stirring. This addition was followed by 8.11g (0.100 mol) of 37 wt% aqueous formaldehyde, which was added over 15 min, resulting in a small temperature increase from 26-33 °C. An additional 5.34g (0.034 mol) of 2-(cyclopent-2-enyl) aniline was then added over 20 min. The resulting mixture was then heated at reflux (ca. 73 °C) for one hour. After cooling the reaction mixture, it was neutralized with 50 mL of 50% aqueous sodium hydroxide. The layers were separated and the solvent of the organic layer was evaporated.

Analysis of the residue revealed a 25.0% conversion of the 2-(cyclopent-2-enyl) aniline to the desired 4,4′-methylene-bis(2-(cyclopent-2-enyl) aniline) had occured. The product gave satisfactory spectral analysis.

## Example 3

## 2-(Cyclopent-2-enyl)-4,4′-oxydianiline

A 200 g (1.00 mol) portion of 4,4′-oxydianiline, 150 g (1.14 mol, 2.27 equiv.) of dicyclopentadiene, 200 g of pentane, and 20 g of a catalyst comprised 13% alumina and 87% silica were charged to a 1,000 cc pressure vessel. The vessel contents were heated to 210 °C with mechanical stirring and maintained at temperature for 16 hours. The contents of the vessel were cooled to room temperature, then extracted with a solvent mixture of 1:1:1 (by volume) methylene chloride, acetonitrile, and ethyl acetate. The extract was assay by gas chromatography which revealed the following hydrocarbon free analysis.

| | GC Area % |
|---|---|
| 4,4′-oxydianiline | 20 |
| 2-(cyclopent-2-enyl)-4,4′-oxydianiline | 54 |
| 2,2′-di(cyclopent-2-enyl)-4,4′--oxydianiline | 26 |
| | 100% |

## Example 4

A 1.64 mol portion of 4,4′-diphenylmethane diamine, 1.23 mol (2.45 equivalent) of dicyclopentadiene, 2.78 mol of pentane, and 20.0 g of an amorphous alumina-silica catalyst comprised of 13% alumina and 87% silica were charged to a 1000 cc pressure vessel equipped with a mechanical stirrer. The vessel was sealed and purged with nitrogen leaving a 32 psig nitrogen blanked. The vessel contents were heated to 205 °C with stirring and were maintained at that temperature for 22 hr. The contents were cooled to 150 °C and isolated catalyst free by hot filtration. Selective removal of residual hydrocarbons by vacuum distillation and analysis by gas chromatography (GC) revealed the following product mixture:

| | GC Area % |
|---|---|
| 4,4′-methylenedianiline | 34% |
| 2-(cyclopent-2-enyl)-4,4′-methylenedianiline | 59% |
| Other Aromatic Diamine derivatives | 7% |
| | 100.0% |

## Example 5

### Preparation of 4,4′-Methylene-bis(2-(cyclopent-1-enyl)aniline)

The 4,4′-methylene-bis(2-(cyclopent-2-enyl)aniline) composition formed in Example 2 is converted to its 4,4′-methylene-bis(2-(cyclopent-1-enyl)aniline) by charging approximately 0.02 moles to a round bottom flask containing mixed xylenes as solvent. Approximately 0.005 moles of potassium hydrodride are added to the mixture and stirring commenced. Over the course of one-half hour, the solution is heated to approximately 110 °C after which a majority of the isopropanol is removed by distillation. The reaction temperature is then raised to approximately 140-150 °C and after approximately one hour, the 4,4′-methylene-bis(2-(cyclopent-1-enyl)aniline) is produced.

The composition when formulated into polyurethane, e.g., a conventional toluene diisocyanate-polytetramethylene glycol prepolymer system effects curing and provides a cross-linking mechanism through the $\alpha,\beta$-unsaturated bond.

## Example 6

### Preparation of 2-(Cyclopent-1-enyl)-4,4′-Oxydianiline

The procedure of Example 5 is repeated except that 2-(cyclopent-2-enyl)-4,4′-oxydianiline is substituted for the 4,4′-methylene-bis(2-(cyclopent-2-enyl)aniline). Isomerization of the $\beta,\gamma$-double bond to the $\alpha,\beta$-double bond configuration is effected through base treatment.

The 2-(cyclopent-1-enyl)-4,4′-oxydianiline product is well suited as a chain extender for polyurethane elastomer systems and can be readily cross-linked with unsaturated monomers through the $\alpha,\beta$-double bond.

## Claims

1. An alkenylated dianiline composition having at least one alkenyl substituent ortho to an amine group represented by the formula:

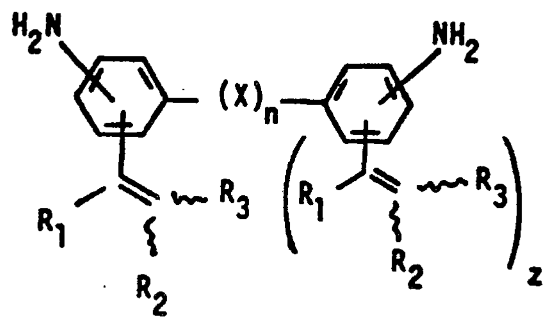

wherein $R_1$, $R_2$, and $R_3$ are hydrogen, $C_{1-3}$ aliphatic, phenyl, halogen or alkoxy radicals, or $R_1$ and $R_2$ and $R_3$ are bridged via an alkylene radical $-(CH_2)_y-$ wherein $y=2$ to 5, and provided not more than one is phenyl, halogen, or alkoxy, X is methylene, alkylene, or branched $C_1$-$C_6$ alkylene gorup, oxygen, sulfur, carbonyl, sulfonyl; or per fluoroalkylene group, $n=0$ or 1, and $z=0$ or 1.

2. The composition of Claim 1 wherein X is $CH_2$ and n is 1.

3. The composition of Claim 2 wherein $R_1$ and $R_2$ are $C_1$ alkyl groups.

4. The composition of Claim 2 wherein $R_1$ is ethyl and $R_2$ is methyl.

5. The composition of Claim 2 wherein $R_1$ and $R_2$ are combined into a ring having from 5-6 carbon atoms.

6. The composition of Claim 2 wherein $R_1$ is ethyl, $R_2$ is ethyl and $R_3$ is methyl.

7. The composition of Claim 2 wherein $R_1$ and $R_2$ are combined into a ring having six carbon atoms.

8. The composition of Claim 2 wherein $R_1$ is hydrogen and $R_2$ is methyl.

9. The composition of Claim 1 wherein X is 0, n is 1 and z is 1.

10. The composition of Claim 9 wherein $R_1$ and $R_2$ are $C_1$ alkyl groups.

11. The composition of Claim 9 wherein $R_1$ is ethyl and $R_2$ is methyl.

12. The composition of Claim 9 wherein $R_1$ and $R_2$ are combined into a ring having from 5-6 carbon atoms.

13. The composition of Claim 9 wherein $R_1$ is ethyl, $R_2$ is ethyl and $R_3$ is methyl.

14. The composition of Claim 9 wherein $R_1$ and $R_2$ are combined into a ring having six carbon atoms.

15. The composition of Claim 9 wherein $R_1$ is hydrogen and $R_2$ is methyl.

16. The composition of Claim 1 wherein X is oxygen, n is 1 and z is 0.

17. The composition of Claim 16 wherein $R_1$ and $R_2$ are $C_1$ alkyl groups.

18. The composition of Claim 16 wherein $R_1$ is ethyl and $R_2$ is methyl.

19. The composition of Claim 16 wherein $R_1$ and $R_2$ are combined into a ring having from 5-6 carbon atoms.

20. The composition of Claim 16 wherein $R_1$ is ethyl, $R_2$ is ethyl and $R_3$ is methyl.

21. The composition of Claim 16 wherein $R_1$ and $R_2$ are combined and represent a six carbon membered ring.

22. The composition of Claim 16 wherein $R_1$ is hydrogen and $R_2$ is methyl.

23. The composition of Claim 1 wherein X is oxygen, n is 1, and z is 1.

24. The composition of Claim 23 wherein $R_1$ and $R_2$ are C, alkyl groups.

25. The composition of Claim 23 wherein $R_1$ is ethyl and $R_2$ is methyl.

26. The composition of Claim 23 wherein $R_1$ and $R_2$ are combined into a ring having from 5-6 carbon atoms.

27. The composition of Claim 23 wherein $R_1$ is ethyl, $R_2$ is ethyl and $R_3$ is methyl.

28. The composition of Claim 23 wherein $R_1$ and $R_2$ are combined and represent a six carbon membered ring.

29. The composition of Claim 23 wherein $R_1$ is hydrogen and $R_2$ is methyl.